# EUROPÄISCHE PATENTANMELDUNG

(11) **EP 4 086 486 A1**
(43) Veröffentlichungstag der Anmeldung: **09.11.2022**
(21) Anmeldenummer: 22000127.5
(22) Anmeldetag: 06.05.2022
(51) Int. Cl.: F16J 15/52, F16L 55/179

(54) **FLEXIBLES DICHTELEMENT ZUR ABDICHTUNG ZWISCHEN FOLIENAUSKLEIDUNGEN UND DURCHFÜHRUNGEN**

(30) Priorität: 06.05.2021 DE 202021001671 U
(71) Anmelder: AGROTEL GmbH, 94152 Neuhaus/Inn (DE)
(72) Erfinder: Laner, Cyriak, 4761 Enzenkirchen (AT)

(57) **Zusammenfassung**

Die Erfindung besteht im Wesentlichen aus einem flexiblen Schlauch (10), an dessen einem Ende sich ungefähr rechtwinkelig nach außen eine flanschartige Fläche (20) erstreckt. Der flexible Schlauch (10) ist im Durchmesser etwas kleiner, wie die gewünschte Durchführungsbohrung ausgeführt. Die flanschartige Fläche (20), die kreisringförmig, aber auch in einer anderen Geometrie dargestellt sein kann, ist ebenso flexibel und bildet die spätere Verbindung mit der Behälterauskleidungsfolie.

Das Dichtelement sich dadurch ergebende Dichtelement kann einstückig oder durch Verschweißen und oder Verkleben mehrerer Folienstücke erfolgen. Dazu kann der Folienschlauch (10) vorher entsprechend länger ausgeführt sein, entsprechend erwärmt werden und über ein Werkzeug in die gewünschte Kontur der flanschartigen Fläche (20) verformt werden.

Mit dem Dichtelement ist eine sichere Abdichtung zu einer Behälterwand gewährleistet, die keinerlei Fehl- oder Rissstellen zum Beton aufweist und daher eine dauerhafte Lösung darstellt.

## Beschreibung

Die Erfindung betrifft eine flexible Dichtungsanordnung, die stoffschlüssig mit der Folie von Behälterauskleidungen verbunden wird und durch eine zweite Dichtfläche einfach mit einer zusätzlichen Dichtung mit einer Durchführung abgedichtet werden kann. Behälter sind bevorzugt große Betontanks mit mehreren Metern Durchmesser, wie sie zur Lagerung von Substraten bei Biogasanlagen eingesetzt werden.

Ein derartiges Dichtelement ist in Anspruch 1 und den folgenden abhängigen Ansprüchen beschrieben.

In verschiedenen Industrien werden große Mengen an flüssigen Stoffen in betonierten Rundbehältern gelagert. Diese Behälter werden meist individuell vor Ort hergestellt und weisen unterschiedliche Durchmesser und unterschiedliche Höhen auf. Zum Schutz des Betons und/oder zur besseren Flüssigkeitsdichtigkeit werden diese Behälter entweder bereits beim Betonieren mit einer Betonschutzfolie versehen oder zu einem späteren Zeitpunkt mit einer Gewebefolie versehen. Es ist meist auch notwendig zusätzliche Durchführungen im Mauerbereich vorzusehen, um verschiedene Leitungen in oder auch aus dem Behälter realisieren zu können. In diesen Bereichen muss eine Folie ausgeschnitten und entfernt werden, wodurch eine Fehlstelle entsteht. Die Schwierigkeit ist die entsprechende einfache, sichere und saubere Abdichtung der Durchführung mit der entsprechenden Behälterauskleidung.

Eine undichte Verbindung mit der Folie führt dazu, dass insbesondere in diesem Bereich Gase und/oder Flüssigkeiten aus dem Behälter in die Durchführung und den angrenzenden Betonmauerbereich eindringen und diesen beschädigen oder im schlimmsten Fall zu einer Undichtigkeit führen.

Daher ist es Ziel der Erfindung ein Dichtelement zu schaffen, welches einerseits einfach auf verschiedene Geometrien angepasst werden kann. So sind unterschiedliche Durchführungsdurchmesser, aber auch unterschiedliche Radien an der Behälterwand zu realisieren. Ebenso soll eine einfache Montage erfolgen können, die eine Dichtigkeit zwischen Folienauskleidung und Durchführung sicher stellt.

Existierende Lösungen in diesem Bereich sind so gestaltet, dass sie oft nur die Durchführung mit der Öffnung in der Behälterwand abdichten. Hierzu werden beispielsweise Quetschdichtungen in sogenannten RDS-Muffen verwendet. Die Dichtelemente stellen die Abdichtung der Durchführungsleitung zur Kernbohrung in der Behälterwand sicher. Die Dichtelemente sind mit einem aufklappbaren Kunststoffquetschflansch ausgestattet, der beim Zusammenziehen der beiden Enden den Durchmesser der Dichtung vergrößert und somit sicher abdichtet. Eine einfache und zuverlässige Abdichtung zur Auskleidungsfolie ist hier nicht möglich und wird meist behelfsmäßig mit Dichtmassen verschmiert, was durch auftretende Bewegungen und Erschütterungen, bzw. der Einsatzzeit zu Rissen und damit zu Undichtigkeiten führt.

Ziel der Erfindung ist es eine einfache und sicher zu verwendende Abdichtung mit einem flexiblen Dichtelement zu schaffen, die die Schwierigkeiten existierender Lösungen überwindet und einfach für unterschiedliche Behälterdurchmesser und Durchführungsdurchmesser gefertigt werden kann.

Ein derartiges Dichtungselement wird nachfolgend in einer bevorzugten Ausführungsform beschrieben und ist durch Anspruch 1 und die folgenden Ansprüche charakterisiert.

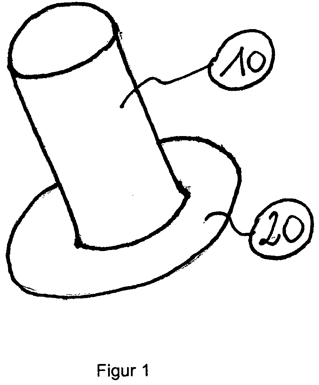

Dabei zeigt Abbildung 1 eine Iso-Ansicht einer Ausführungsvariante des Dichtelements Dabei werden folgende Bezugszeichen verwendet:
- 10: Schlauch
- 20: flanschartige Fläche

Das Dichtelement besteht im Wesentlichen aus einem flexiblen Schlauch (10), an dessen einem Ende sich ungefähr rechtwinkelig nach außen eine flanschartige Fläche (20) erstreckt. Der flexible Schlauch (10) ist im Durchmesser etwas kleiner, wie die gewünschte Durchführungsbohrung ausgeführt. Die flanschartige Fläche (20), die kreisringförmig, aber auch in einer anderen Geometrie dargestellt sein kann, ist ebenso flexibel und bildet die spätere Verbindung mit der Behälterauskleidungsfolie.

Das Dichtelement ist bevorzugt aus dem gleichen Material gefertigt, wie die Behälterauskleidungsfolie. Dieses Folienmaterial kann aus PP, LDPE, HDPE, PVC oder anderen Kunststoffen, auch in Kombinationen untereinander und auch in Mehrschichtaufbauten beispielsweise mit eingelegtem Gewebe gefertigt sein.

Die Fertigung des Dichtelements kann einstückig oder durch Verschweißen und oder Verkleben mehrerer Folienstücke erfolgen. Dazu kann der Folienschlauch (10) vorher entsprechend länger ausgeführt sein, entsprechend erwärmt werden und über ein Werkzeug in die gewünschte Kontur der flanschartigen Fläche (20) verformt werden. Eine weitere Möglichkeit ist, den Schlauch (10) an mehreren Stellen einzuscheiden und mit einer kreisrund ausgeschnittenen Folie, die rechtwinkelig dazu angebracht wird zu verschweißen oder zu verkleben.

Es ist auch möglich über andere Fertigungsverfahren, beispielsweise Spritzgießen, Pressen oder Gießen das Dichtelement herzustellen. Hier sind die entsprechenden Werkzeugkosten zu beachten, die eine Fertigung eventuell unwirtschaftlich machen. Wichtig ist eine vollflächige Verbindung zwischen flanschförmiger Fläche (20) und schlauförmigen Teil (10), damit das Dichtelement als solches die Dichtfunktion gewährleisten kann.

Das Dichtelement kann sich durch das flexible Material dem jeweiligen Behälterradius gut anpassen, damit ist nur für unterschiedliche Durchführungsdurchmesser ein unterschiedliches Dichtelement erforderlich, jedoch kann jeder Behälterradius mit dem gleichen Dichtelement ausgestattet und eine sichere Gas- und flüssigkeitsdichte Verbindung zwischen Dichtelement und Auskleidungsfolie hergestellt werden.

Dies ist insbesondere vorteilhaft, da durch die Vorortherstellung der Behälter einerseits unterschiedliche Durchmesser gebaut werden, andererseits auch keine Idealrunden Behälter sind, sondern oftmals leichte Ovalitäten aufweisen und durch die Flexibilität des Dichtelements diese sicher ausgeglichen werden und keine Spannungen in die Verbindung eingebaut werden. Eingebaute Spannungen können durch die Langzeiteinflüsse und Erschütterungen schnell zu Rissen und damit Bauteilversagen führen.

Für diese Verbindung zwischen Auskleidungsfolie und Dichtelement im Bereich der flanschartigen Fläche (20) wird bevorzugt eine stoffschlüssige Verbindungsart realisiert. Dies kann ein Warmgasschweißprozeß, ein Extrusionsschweißprozess, aber auch ein Heizelementschweißprozess sein. Dabei wird die im Wesentlichen kreisrunde Fläche (20) mit der dann parallel vorliegenden Auskleidungsfolie verbunden.

Neben dem Schweißen ist es auch möglich eine Verklebung vorzunehmen. Durch das Verschweißen, bzw. Verkleben ist eine dichte Verbindung zwischen Auskleidungsfolie und Dichtelement gewährleistet.

Das schlauchförmige Ende (10) des Dichtelements ragt in die Durchführungsbohrung und wird durch eine Quetschdichtung, oder auch ein aufschäumendes Dichtungsmaterial zwischen Durchführung und Bohrung entsprechend flüssigkeits- und gasdicht abgedichtet.

Dadurch ist mit dem Dichtelement eine sichere Abdichtung gewährleistet, die keinerlei Fehl- oder Rissstellen zum Beton aufweist und daher eine dauerhafte Lösung darstellt. Dadurch können in einfacher Art gas- und flüssigkeitsdichte Durchführungen hergestellt werden. Die erfindungsgemäße Vorrichtung wird in Anspruch 1 und den abhängigen Ansprüchen 2 bis 6 beschrieben.

## Patentansprüche

1. Dichtelement zur zuverlässigen Abdichtung zwischen einer Auskleidungsfolie und einer Durchführungsleitung bei einem betonierten Flüssigkeitsbehälter aus thermoplastischen Material, welches eine schlauchförmige Fläche (10) aufweist, die sich zumindest teilweise in die Durchgangsöffnung erstreckt **dadurch gekennzeichnet, dass** dieses eine dazu rechtwinkelig angeordnete und sich nach außen erstreckende flanschartige Fläche (20) im Wesentlichen parallel zur Auskleidungsfolie aufweist.

2. Dichtelement nach Anspruch 1, **dadurch gekennzeichnet, dass** der thermoplastische Kunststoff des Dichtelements aus der Gruppe PP, LDPE, HDPE oder PVC stammt.

3. Dichtelement nach mindestens einem der Ansprüche 1 und 2, **dadurch gekennzeichnet, dass** die beiden Flächen (10, 20) stoffschlüssig miteinander verbunden sind.

4. Dichtelement nach mindestens einem der Ansprüche 1 bis 2, **dadurch gekennzeichnet, dass** die beiden Flächen (10, 20) einstückig gefertigt werden.

5. Dichtelement nach mindestens einem der Ansprüche 1 bis 4, **dadurch gekennzeichnet, dass** die flanschartige Fläche (20) mit der Auskleidungsfolie stoffschlüssig verbunden werden kann.

6. Dichtelement nach mindestens einem der Ansprüche 1 bis 5, **dadurch gekennzeichnet, dass** die flanschartige Fläche (20) mit der Auskleidungsfolie durch Warmgasschweißen verbunden wird.
